## Europäisches Patentamt
## European Patent Office
## Office européen des brevets

(11) Veröffentlichungsnummer: **0 171 619 B1**

# EUROPÄISCHE PATENTSCHRIFT

(45) Veröffentlichungstag der Patentschrift: **10.04.91**

(51) Int. Cl.⁵: **A47J 31/057**

(21) Anmeldenummer: **85108751.0**

(22) Anmeldetag: **12.07.85**

(54) **Kaffeemaschine.**

(30) Priorität: **28.07.84 DE 3427948**

(43) Veröffentlichungstag der Anmeldung:
**19.02.86 Patentblatt  86/08**

(45) Bekanntmachung des Hinweises auf die
Patenterteilung:
**10.04.91 Patentblatt  91/15**

(84) Benannte Vertragsstaaten:
**DE FR GB IT NL**

(56) Entgegenhaltungen:
**DE-A- 2 430 860**
**DE-B- 2 904 431**
**DE-U- 7 600 611**
**GB-A- 2 109 909**
**US-A- 3 034 417**

(73) Patentinhaber: **Braun Aktiengesellschaft**
**Rüsselsheimer Strasse 22**
**W-6000 Frankfurt/Main(DE)**

(72) Erfinder: **Pächer, Lothar**
**Am Hipperich 87**
**W-6500 Mainz 1(DE)**
Erfinder: **Schiebelhuth, Heinz**
**An der Nachtweide 17**
**W-6000 Frankfurt/M. 50(DE)**
Erfinder: **Wonka, Boris**
**Beethovenstrasse 78**
**W-6078 Neu-Isenburg(DE)**

(74) Vertreter: **Einsele, Rolf**
**Braun Aktiengesellschaft Postfach 1120**
**Frankfurter Strasse 145**
**W-6242 Kronberg Taunus(DE)**

## Beschreibung

Die Erfindung betrifft eine Kaffeemaschine nach dem Oberbegriff des Patentanspruchs 1.

In den heute üblichen Kaffeemaschinen (vgl. zum Beispiel DE-U-78 09 444) wird zur Kaffeezubereitung Kaltwasser in einem Durchlauferhitzer erhitzt und über ein Steigrohr einem Kaffeemehl enthaltenden Filtertrichter zugeleitet, aus dem der Kaffee in eine darunterstehende Kaffeekanne abfließt. Um den Kaffee während des Brühens und auch danach in der üblicherweise aus Glas bestehenden Kaffeekanne nicht auskühlen zu lassen, sondern ihn auf der erwünschten höheren Trinktemperatur zu halten, steht diese dabei auf einer Warmhalteplatte, zu deren Erwärmung im allgemeinen der Heizkörper des Durchlauferhitzers genutzt wird. Auch nach Beendigung des Brühvorgangs wird die Warmhalteplatte geregelt weiter beheizt, wobei die Regelung dadurch erfolgt, daß ein mit der Warmhalteplatte thermisch gekoppelter, temperaturabhängiger Reglerschalter ein- bzw. ausgeschaltet wird, sobald er eine vorgegebene Schließ- bzw. Maximaltemperatur unter- bzw. überschreitet.

Bei diesen üblichen Kaffeemaschinen ist es auch bereits bekannt, das Ende des Brühvorganges mit einer festlegbaren Zeitverzögerung akustisch anzuzeigen (DE-A-29 04 431) oder den Benutzer durch ein Signal auf eine eingetretene Verkalkung des Durchlauferhitzers hinzuweisen (DE-A-26 59 079).

Es hat sich nun herausgestellt, daß bestimmte Geschmackskomponenten des Kaffees infolge des ständigen Nachheizens durch die Warmhalteplatte beeinträchtigt werden können oder nicht zur vollen Entfaltung kommen. Aus diesem Grunde sind bisher zahlreiche Benutzer elektrischer Kaffeemaschinen dazu übergegangen, den Kaffee unmittelbar nach Beendigung des Brühvorganges aus der zur Kaffeemaschine gehörenden Glaskanne in eine Isolierkanne mit rundum wärmeisolierender Wandung umzufüllen und ihn bis zum Einschenken dann aufzubewahren.

Diese Handhabung ist umständlich und durch die notwendige ständige Bereitstellung und regelmäßige Säuberung sowohl einer Glaskanne als auch einer Isolierkanne kosten- und zeitaufwendig.

Eine weitere Maßnahme zur Warmhaltung des zubereiteten Kaffees ohne die entsprechende Kaffeekanne auf einer Warmhalteplatte nachzubeheizen besteht darin (vgl. DE-U7 600 611), ihre Außenflächen mit Ausnahme ihres Bodens so weitgehend wie möglich wärmeisolierend auszugestalten, diese aber mit einem gut wärmeleitenden Boden relativ hoher Wärmekapazität auszustatten und ihre Seitenwände derart auszuführen, daß letztere sich nach unten bis über die Unterseite des Bodens hinaus erstrecken. Steht eine derartige Kaffeekanne mit ihrem Boden auf der Warmhalteplatte der dazugehörigen Kaffeemaschine, wird dieser entsprechend aufgeheizt. Nach Beendigung des Brühvorgangs kann diese bekannte Kaffeekanne von der Warmhalteplatte abgenommen werden, ohne daß das in ihr enthaltene Getränk sich relativ schnell abkühlt. Der Grund dafür, liegt zum einen in dem als Wärmereservoir dienenden Boden und zum anderen in der Tatsache, daß sich zwischen der Abstellfläche - zum Beispiel einem Tisch - und dem Boden der Kaffeekanne durch die sich bis zur Abstellfläche nach unten erstreckenden Seitenwände ein Luftpolster bildet, welches Wärmeverluste durch Wärmeleitung und Konvektion deutlich vermindert. Es bleibt aber der Nachteil, daß die Kaffeekanne nach Beendigung des Brühvorgangs von der Warmhalteplatte abgenommen werden muß, da ansonsten der darin enthaltene Kaffee immer wieder in aromaschädigender Weise erhitzt wird.

Es war daher Aufgabe der Erfindung, ausgehend von einer gattungsgemäßen Kaffeemaschine mit einer auch nach Beendigung des Brühvorgangs weiterbeheizten Warmhalteplatte, eine neue Kaffeemaschine zu schaffen, mit der der aufgebrühte Kaffee aromaschonend warmgehalten werden kann.

Diese Aufgabe wird dadurch gelöst, daß beim Betreiben einer Kaffeemaschine, die in bekannter Weise mit einer auf einer Warmhalteplatte abstellbaren Kaffeekanne und einem gleichzeitig die Warmhalteplatte beheizenden und das Brühwasser erhitzenden Druchlauferhitzer sowei einem temperaturabhängigen Reglerschalter ausgestattet ist, der den Heizstrom unterbricht, sobald die Temperatur des Reglerschalters eine vorgegebene Maximaltemperatur überschreitet, die beiden folgenden Maßnahmen getroffen werden:

1. Es wird eine Kaffeekanne mit weitgehend wärmeisolierenden Außenflächen, jedoch wärmeleitendem Boden verwendet, und

2. es sind Schaltmittel vorhanden, die nach Beendigung des Brühvorgangs einen zusätzlichen Schalter öffnen und offen halten und damit den Heizstrom des Durchlauferhitzers endgültig abschalten.

Es hat sich gezeigt, daß erst die Kombination dieser beiden Maßnahmen den angestrebten Erfolg gewährleistet; denn die alleinige Verwendung einer wärmeisolierenden Kaffeekanne auf eine in bekannter Weise nachheizenden Warmhalteplatte führt in kurzer Zeit zur Überhitzung und damit zum Zerkochen und zur Zerstörung der Aromastoffe des Kaffees. Andererseits hat die endgültige Abschaltung des Heizstromes am Ende des Brühvorgangs bei Verwendung einer üblichen, nicht wärmeisolierenden Kaffeekanne unvermeidlich zur Folge, daß der Kaffee sehr schnell unter die erwünschte Trinktemperatur abkühlt.

Andererseits hat die endgültige Abschaltung des Heizstromes am Ende des Brühvorganges bei Verwendung einer üblichen, nicht wärmeisolierenden Kanne unvermeidlich zur Folge, daß der Kaffee sehr schnell unter die erwünschte Trinktemperatur abkühlt.

Vorzugsweise erfolgt die erfindungsgemäße endgültige Abschaltung des Heizstromes ca. 2 Minuten nach dem Leerkochen des Durchlauferhitzers, nämlich nach der sogenannten Abtropfzeit, d.h. zu einem Zeitpunkt, in dem erfahrungsgemäß das letzte in den Kaffeefilter geförderte Wasser durch das Kaffeemehl hindurchgesickert und in die Kaffeekanne abgeflossen ist.

In einer besonders vorteilhaften Ausgestaltung des erfindungsgemäßen Kaffemaschine, wird das Ende des Brühvorganges durch ein gleichzeitig mit der endgültigen Abschaltung des Heizstromes ausgelöstes akustisches und/oder optisches Signal angezeigt. Diese an sich bekannte Maßnahme gewinnt in Verbindung mit der erfindungsgemäßen Verwendung einer Warmhaltekanne mit wärmeisolierender und daher im allgemeinen undurchsichtiger Seitenwandung ganz neue Bedeutung und besondere Wichtigkeit, da bei einer solchen Kanne nicht mehr auf visuellem Wege festgestellt werden kann, ob die Kaffeeherstellung beendet ist.

Die beigefügte Zeichnung erläutert wesentliche Details von Kaffeemaschinen, die im Rahmen der vorliegenden Erfindung vorgeschlagen werden:

Figur 1
zeigt das Aufbauprinzip üblicher Kaffeemaschinen, das auch der vorliegenden Erfindung zugrundeliegt.
Figur 2
zeigt ein Diagramm des zeitlichen Verlaufs der Durchlauferhitzer-Temperatur T bei unverkalktem und bei stark verkalktem Durchlauferhitzer.
Figuren 3 bis 5
geben - zum Teil in Blockdarstellung - Prinzipschaltbilder von elektrisch/elektronischen Schaltungen für Kaffeemaschinen gemäß der vorliegenden Erfindung wieder.

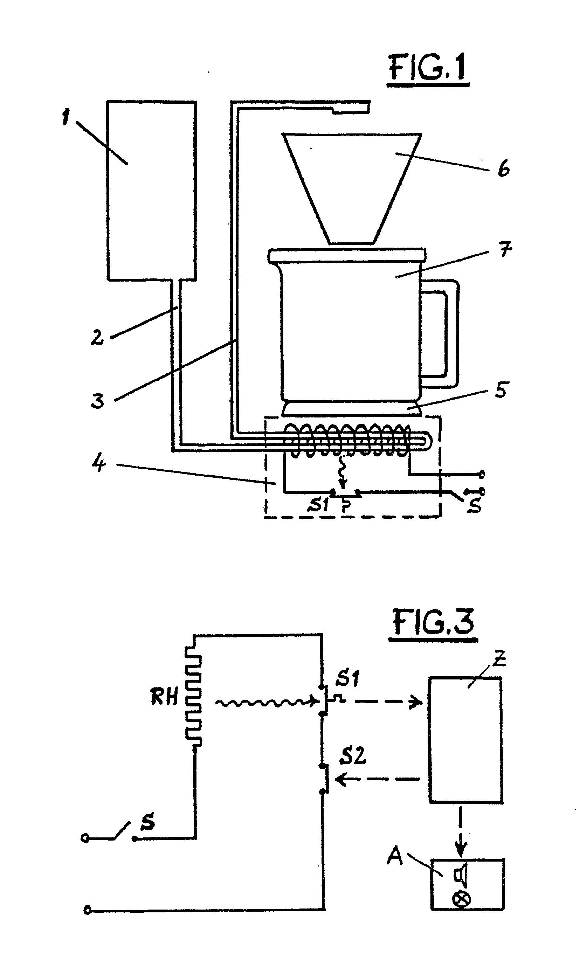

Figur 1 veranschaulicht das Konstruktions- und Funktionsprinzip üblicher Kaffeemaschinen, nach dem auch die Kaffeemaschine gemäß der vorliegenden Erfindung aufgebaut ist und arbeitet: Die Kaffeemaschine enthält einen Kaltwasser-Vorratsbehälter 1 aus dem das Wasser durch ein Fallrohr 2 zum elektrischen Durchlauferhitzer 4 gelangt, von dem es auf Siedetemperatur erhitzt und über ein Steigrohr 3 in den Filtertrichter 6 getrieben wird. Im Filtertrichter 6 extrahiert es das darin befindliche Kaffeemehl, und der entstehende Kaffee fließt in eine Kaffeekanne 7, die auf einer durch die Heizung des Durchlauferhitzers 4 erwärmten Warmhalteplatte 5 steht. Dem Durchlauferhitzer 4 ist in üblicher Weise ein temperaturabhängiger Reglerschalter $S_1$ zugeordnet, der den Heizstrom trotz geschlossenem Netzschalter S unterbricht, sobald der Durchlauferhitzer eine vorgegebene Maximaltemperatur $T_1$ von z.B. 145 °C überschreitet und der nach Abkühlung auf seine Schließtemperatur $T_2$ von z.B. 130 °C den Heizstrom wieder einschaltet.

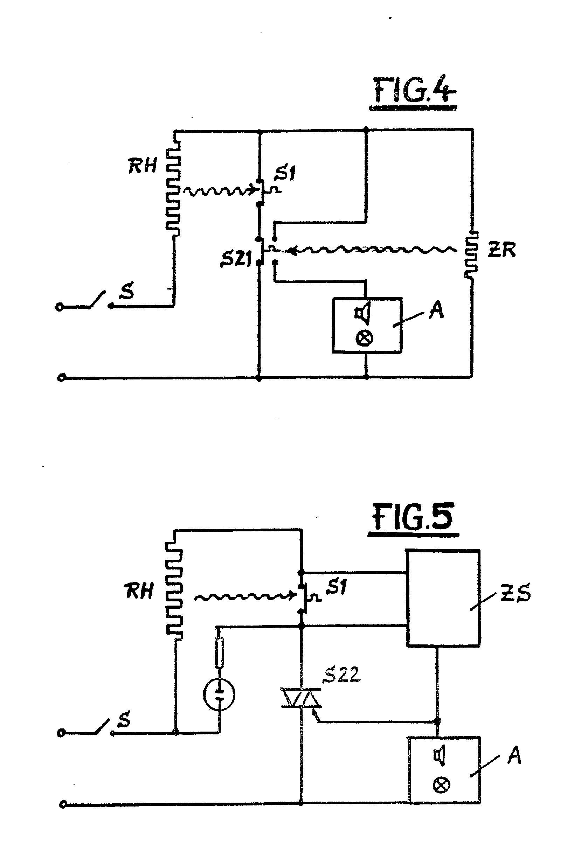

Wie Figur 3 zeigt, ist eine Kaffeemaschine nach der vorliegenden Erfindung, die den Betrieb mit einer Warmhaltekanne, deren zumindest überwiegender Teil der Seiten- und Deckelwandung wärmeisolierend und deren Boden wärmeleitend ausgebildet ist ermöglicht durch die folgenden zusätzlichen Merkmale gekennzeichnet. Sie enthält Schaltmittel Z, die durch das Öffnen des den Heizstrom unterbrechenden üblichen temperaturabhängigen Reglerschalters $S_1$ so aktiviert werden, daß sie einen den Heizstrom endgültig abschaltenden, mit dem Heizwiderstand RH des Durchlauferhitzers 4 und dem Reglerschalter $S_1$ in Reihe liegenden zusätzlichen Schalter $S_2$ betätigen und gegebenenfalls eine Einrichtung A zur Erzeugung eines optischen und/oder akustischen Signals einschalten.

Eine vorteilhafte Ausführungsform einer derartigen Kaffeemaschine ist - wie in Figur 4 dargestellt - dadurch gekennzeichnet, daß der zusätzliche Schalter ein vom Heizwiderstand RH des Durchlauferhitzers 4 thermisch nicht beeinflußter Thermoschalter $S_{21}$ und das diesen betätigende Schaltmittel ein thermisch an ihn angekoppelter Heizwiderstand ZR ist, der zu der Reihenschaltung der Schalter $S_1$ und $S_{21}$ parallelgeschaltet ist, so daß er durch das Öffnen des Schalters $S_1$ an Spannung gelegt wird, sich erwärmt und den Thermoschalter $S_{21}$ öffnet und so lange offenhält, bis die Versorgungsspannung durch Öffnen des Netzschalters S abgeschaltet wird. Es ist ersichtlich, daß der Thermoschalter $S_{21}$ in dieser Anordnung erst mit einer durch das relativ langsame Aufheizen seines Heizwiderstandes ZR bedingten zeitlichen Verzögerung nach dem Öffnen des Reglerschalters $S_1$ seinen Kontakt Öffnet, und durch geeignete Dimensionierung und konstruktive Gestaltung der Wärmeübergänge ermöglicht es diese Schaltung daher, auch, eine bestimmte Verzögerungszeit auszuwählen Dabei ist der zusätzliche Thermoschalter $S_{21}$ vorzugsweise am Auslauf des Kaltwasser-Vorratsbehälters 1 oder am Fallrohr 2 angeordnet und befestigt, so daß sich durch die Kühlwirkung des Kaltwassers nicht nur eine zusätzliche Gestaltungsmöglichkeit für die Verzögerung des Schaltzeitpunktes, sondern außerdem der Vorteil ergibt, daß nach einem abgeschlossenen Brühvorgang - wenn also alles Wasser verkocht ist und beide Thermoschalter $S_1$ und $S_{21}$ ihre Kontakte geöffnet und die Heizung endgültig abgeschaltet haben - bei Bedarf sofort ein neuer Brühvorgang eingeleitet werden kann, da das für die nächste Kaffeecharge neu eingefüllte Kaltwasser das Schließen des Thermoschalters S21 beschleunigt und so die Heizung RH des Durchlauferhitzers 4 schneller wieder betriebsbereit gemacht wird.

Wie in Figur 4 außerdem angedeutet ist, bietet diese Schaltung auch die Möglichkeit, über den Thermoschalter S21 eine Einrichtung A einzuschalten, die durch ein akustisches und/oder optisches Signal (z.B. einen andauernden oder intermittierenden Summton oder eine Blinklampe) die Beendigung des Brühvorganges anzeigt.

Eine besonders vorteilhafte und wegen ihrer weiterführenden Ausgestaltungsmöglichkeiten bevorzugte Ausführungsform der Erfindung ist in dem Prinzipschaltbild in Figur 5 dargestellt. In dieser Schaltung übernimmt ein durch ein elektrisches Signal betätigbarer mechanischer oder elektronischer Schalter S22 das endgültige Abschalten des Heizstromes. (Nur beispielsweise ist in Fig. 5 für diesen Schalter S22 ein Triac eingezeichnet.) Das ihn betätigende Schaltmittel ist eine durch das Öffnen des Reglerschalters S1 triggerbare - vorzugsweise elektronische Zeit-Schaltung ZS, deren gegenüber dem Öffnungszeitpunkt des Reglerschalters S1 um eine vorgegebene Zeitspanne verzögertes Ausgangssignal den Schalter S22 öffnet und offenhält. Die Schaltung kann ferner eine Betriebsanzeige enthalten, die in dem Ausführungsbeispiel der Fig. 5 aus einer Glimmlampe mit Vorwiderstand besteht und zu dem Heizwiderstand RH und dem Reglerschalter S1 parallelgeschaltet ist, während sie mit dem Schalter S22 in Reihe liegt, so daß sie erst dann erlischt, wenn der Schalter S22 geöffnet und somit der Durchlauferhitzer endgültig abgeschaltet wird. (In den in den anderen Figuren dargestellten Schaltungsbeispielen sind entsprechende Betriebsanzeigeeinrichtungen nicht eingezeichnet.)

Unter dem Begriff "Zeit-Schaltung" ist hier eine Schaltlogik zu verstehen, die mit den dem einschlägigen Fachmann geläufigen Mitteln, vorzugsweise elektronischen Schaltelementen, ein Eingangssignal - hier das Öffnungssignal des Reglerschalters S1 - in vorgegebener Weise so verarbeitet, daß unter Berücksichtigung von der Dauer bzw. Häufigkeit dieses vom Reglerschalter S1 abgegebenen Eingangssignals das zur Betätigung des Schalters 22 und gegebenenfalls der Signaleinrichtung A bestimmte Ausgangssignal der Zeit-Schaltung ZS verzögert oder unterdrückt wird.

Vorzugsweise enthält die in der vorstehend beschriebenen Ausführungsform der Erfindung verwendete Zeit-Schaltung ZS einen Zeiteinheiten zählenden Zähler, der durch das Öffnen des Reglerschalters S1 gestartet wird und der nach einer vorgegebenen Anzahl von gezählten Zeiteinheiten - vorzugsweise entsprechend der Filterabtropfzeit von ca. 2 Minuten - ein Ausgangssignal abgibt, das den Heizwiderstand RH des Durchlauferhitzers 4 durch Öffnen des Schalters S22 endgültig abschaltet und gegebenenfalls eine Einrichtung A zur Erzeugung eines optischen und/oder akustischen Signals einschaltet und steuert.

Die bisher beschriebenen Schaltungsmerkmale ermöglichen den ordnungsgemäßen Betrieb der erfindungsgemäßen Kaffeemaschine nur lange, wie der Durchlauferhitzer der Kaffeemaschine noch nicht oder nur mäßig verkalkt ist, so daß die Ausschalt-Temperatur am Reglerschalter tatsächlich erst dann zum ersten Mal erreicht wird, wenn alles Wasser verkocht, die Brühphase also beendet ist. Dies ist bei einem stärker verkalkten Durchlauferhitzer nicht mehr der Fall; vielmehr erhitzt sich dieser bekanntlich auch bereits während der Brühphase auf die Ausschalttemperatur des Reglerschalters. Bei einer Abschalt-Automatik, in der diese Möglichkeit der vorzeitigen Erwärmung des Durchlauferhitzers auf die Ausschalt-Temperatur des Reglerschalters nicht berücksichtigt ist, bedeutet dies, daß sie bei starker Verkalkung bereits in Funktion tritt, wenn der Reglerschalter erstmals anspricht, obwohl erst ein Teil des Wasservorrates verkocht ist.

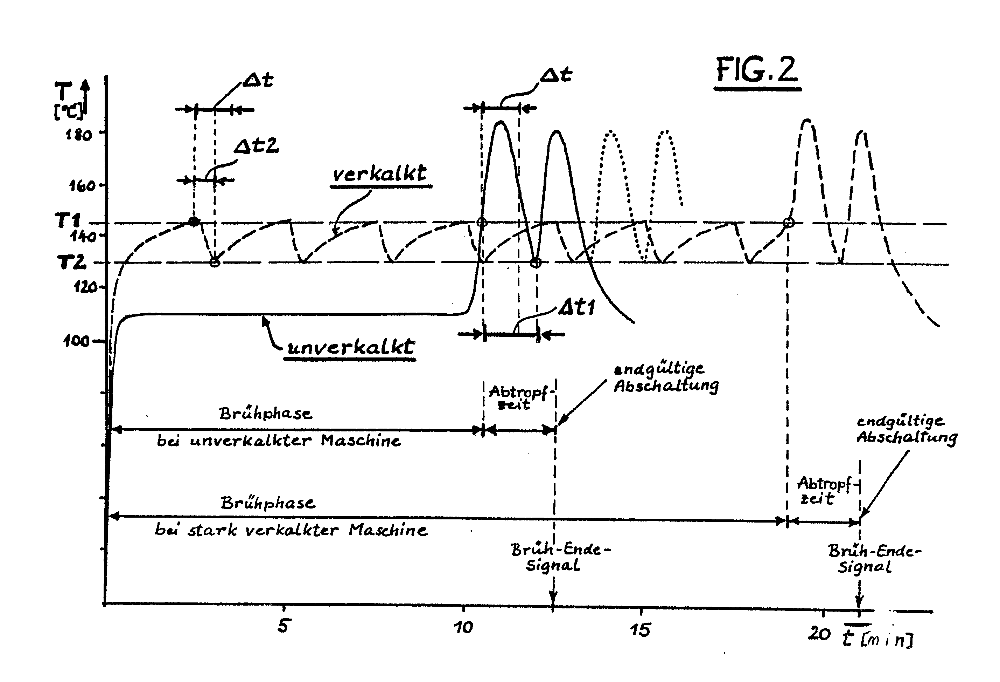

Figur 2 erläutert den zeitlichen Verlauf der Durchlauferhitzer-Temperatur T, wie er sich durch das Schaltspiel des Reglerschalters S1 ergibt, und zwar zeigt die durchgezogene Kurve den Temperaturverlauf, der sich bei unverkalktem Durchlauferhitzer übereinstimmend sowohl an üblichen Kaffeemaschinen als auch an Geräten nach der vorliegenden Erfindung ergibt. Dagegen stellt die gestrichelte Kurve den Temperaturverlauf an einem verkalktem Durchlauferhitzer dar, und zwar unter der Voraussetzung, daß die betreffende Kaffeemaschine entweder keine automatische Endabschaltung enthält oder daß diese Abschaltung frühestens nach dem Verkochen des gesamten Tankinhalts in Funktion tritt.

Im unverkalkten Fall - durchgezogene Kurve in Fig. 2 - steigt die Temperatur am Durchlauferhitzer zunächst rasch an und bleibt dann so lange nahezu konstant, wie das im Durchlauferhitzer enthaltene Wasser eine seine Siedetemperatur wesentlich übersteigende Temperaturzunahme verhindert. Sobald dagegen alles Wasser aus dem Tank verkocht und somit die Brühphase beendet ist, steigt die Temperatur des Durchlauferhitzers steil an, so daß der Reglerschalter S1 bei Erreichen seiner Ausschalttemperatur T1 den Heizstrom unterbricht. Nach kurzem Überschwingen fällt die Temperatur des nun leeren Durchlauferhitzers ab, bis sie nach einer Zeitspanne $\Delta t1$ die Wiedereinschalttemperatur T2 des Reglerschalters S1 erreicht und der Heizwiderstand RH für einen erneuten Temperaturanstieg sorgt. Dieser Temperaturanstieg und anschließende -abfall wiederholt sich - wie in Figur 2 durch den gepunkteten Kurvenverlauf angedeutet - infolge des Reglerspiels des Reglerschalters S1 bei üblichen Kaffeemaschinen so lange, bis das Gerät durch Betätigung des Netzschalters S endgültig abgeschaltet wird. In den erfindungsgemäßen Kaffeemaschinen nach den Ansprüchen 1 bis 9 erfolgt diese Abschaltung bei unverkalktem Durchlauferhitzer einwandfrei automatisch, d.h., ohne oder mit nur mäßiger Verkalkung ist der Betrieb solcher Kaffeemaschinen mit Warmhaltekannen der angegebenen Art gewährleistet.

Ganz anders liegen die Verhältnisse dagegen bei einem stärker verkalktem Durchlauferhitzer, dessen Temperaturverlauf prinzipiell der gestrichelten Kurve in Figur 2 entspricht. Offensichtlich würde eine Abschaltautomatik, die bereits nach erstmaligem Überschreiten der Ausschalttemperatur T1 des Reglerschalters S1 die Kaffeemaschine endgültig stillegt, in diesem Fall dazu führen, daß eine derart verkalkte Maschine überhaupt nicht mehr benutzbar ist, bevor man sie einer Entkalkungsbehandlung unterzogen hat. Obwohl dieser Effekt als Verkalkungsanzeige genutzt werden kann, ist er nicht unbedingt erwünscht, da die Kaffeemaschine im Stadium seines Auftretens unter Inkaufnahme einer gewissen Verlängerung der Brühzeit durchaus noch betriebfähig wäre.

Es stellte sich daher die weitere Aufgabe, in einer Kaffeemaschine zur nach den Ansprüche 1 bis 9 die Abschaltautomatik so zu gestalten, daß der Durchlauferhitzer auch bei stärkerer Verkalkung erst dann endgültig abgeschaltet wird, wenn der gesamte Inhalt des Wassertanks abgeflossen und verkocht ist, daß also der in Figur 2 gestrichelt gezeichnete Kurvenverlauf realisiert wird.

Zur Lösung dieser Aufgabe wird gemäß der vorliegenden Erfindung eine Kaffeemaschine mit einer Schaltungsanordnung vorgeschlagen, die dem Prinzipschaltbild der Figur 5 entspricht und in der die Zeit-Schaltung ZS zusätzlich zu dem Zähler Schaltmittel enthält, die diesen jeweils auf Null zurückschalten und bis zum erneuten Öffnen des Reglerschalters S1 in der Null-Position gesperrt halten, falls der der Reglerschalter S1 seine Kontakte innerhalb einer vorbestimmten Zeitspanne △ t (Zeitfenster) nach dem Öffnen infolge schneller Abkühlung wieder schließt. Vorzugsweise sind die besagten Schaltmittel auf eine Zeitspanne △ t eingestellt, die kleiner ist als die kürzeste vorkommende Trockenlauf-Periode △t1 bei unverkalktem Durchlauferhitzer und größer als die längste vorkommende Abkühl-Periode △ t2 des wassergefüllten, stark verkalkten Durchlauferhitzers während seiner Brüh-Phase zwischen dem Öffnen und Schließen des Reglerschalters S1. In einer derartigen erfindungsgemäßen Kaffeemaschine entspricht der Temperaturverlauf am Durchlauferhitzer bei unverkalktem Durchlauferhitzer der durchgezogenen Kurve in Fig. 2 und bei verkalktem Durchlauferhitzer dem gestrichelten Kurvenverlauf.

Die Länge der Zeitspannen △ t1 und △ t2 ist maschinenspezifisch. In einer vorliegenden praktischen Ausführungsform betrug beispielsweise △ t1 ≈ 2 min und △ t2 ≈ 0,5 min, so daß für das Zeitfenster △ t eine Dauer von 41 s gewählt und fest eingestellt wurde.

Wie Fig. 2 verdeutlicht, bewirken die nach Anspruch 10 oder 11 vorgesehenen Schaltmittel, die den Zähler der Zeit-Schaltung auf Null zurücksetzen, falls der Reglerschalter S1 innerhalb einer vorgegebenen Zeitspanne △ t nach dem Öffnen wieder auf seine Schließ-Temperatur T2 abgekühlt ist, daß nicht jedes Öffnen des Reglerschalters S1 zum endgültigen Abschalten des Heizstromes führt, und die zusätzlich einschränkende Bedingung gemäß Anspruch 9 schließt sogar mit Sicherheit aus, daß bei einer derart ausgebildeten Kaffeemaschine eine Verkalkung zur vorzeitigen endgültigen Abschaltung führt.

Im einzelnen hat dies folgende Ursachen: Zwar wird auch in einer solchen erfindungsgemäßen Kaffeemaschine der erste steile Temperaturanstieg, mit dem ein stark verkalkter Durchlauferhitzer die Ausschalt-Temperatur T1 des Reglerschalters S1 bereits kurz nach der Inbetriebnahme erreicht, dazu führen, daß die Zeit-Schaltung ZS durch das Öffnen des Reglerschalters S1 getriggert wird und ihr Zähler zu laufen beginnt; dies ist jedoch unschädlich und führt regelmäßig nicht zur endgültigen Abschaltung des Durchlauferhitzers, da es innerhalb des vorgegebenen Zeitfensters △ t nach der kurzen Abkühlperiode △ t2 zum Wiederschließen des Reglerschalters S1 kommt, woraufhin die erfindungsgemäß vorgesehenen Schaltmittel den Zähler so lange auf Null setzen, bis die Durchlauferhitzertemperatur erneut die Ausschalttemperatur T1 des Reglerschalters S1 erreicht und die Zeit-Schaltung ZS zum Anlaufen bringt. Dieser Vorgang wiederholt sich, bis der Durchlauferhitzer trotz Verkalkung alles Wasser verkocht hat und es zu dem steil ansteigenden und überschwingenden Temperaturverlauf der Trockenlaufphase kommt, der mit demjenigen bei kalkfreiem Durchlauferhitzer nahezu übereinstimmt und in dem die Zeitspanne zwischen dem Öffnen und Wiederschließen des Reglerschalters S1 nicht innerhalb des vorgegebenen Zeitfensters △ t liegt. Infolgedessen kommt es dann auch nicht zum Zurücksetzen des Zählers der Zeitschaltung ZS, mit der Folge, daß diese programmgemäß nach Ablauf der vorgegebenen, ca. zweiminütigen Abtropfzeit die endgültige Abschaltung des Durchlauferhitzers veranlaßt.

Vorzugsweise enthält die Zeit-Schaltung ZS einen Zähler, dem als Zeitbasis die Dauer einer Schwingungsperiode der Netz-Wechselspannung zugrundeliegt und der jeweils binäre Vielfache dieser Zeitbasis als Schaltzeitpunkte bereitstellt. Das heißt, daß bei einer Netzfrequenz von 50 Hz, entsprechend einer Schwingungsdauer von 0,02 s, Schalt- oder Vergleichszeiten von beispielsweise 0,02 $\times 2^{11}$ s ≈ 41 s (Zeitfenster $\Delta$ t) oder 0,02 $\times 2^{13}$ s ≈ 2 min (Abtropfzeit) problemlos realisierbar sind.

Die durch die Zugrundelegung der Netzfrequenz erzielte sichere, stabile und reproduzierbare Normierung der Zeit-Schaltung kann in einer weiteren Ausgestaltung der Erfindung vorteilhaft zur detaillierten Steuerung des Signalgebers A genutzt werden, der dann vorzugsweise einen Summer enthält, dessen akustisches Signal durch die Zeit-Schaltung ZS nicht nur ein- und ausschaltbar, sondern auch mit einer in der Zeit-Schaltung erzeugten Impulsfolge modulierbar ist, deren Impulsfolge-Abstand von der Zeitbasis des Zählers abgeleitet ist und ein binäres Vielfaches der Netz-Schwingungsperiode beträgt.

## Ansprüche

1. Kaffeemaschine mit einem Vorratsbehälter (1), aus dem kaltes Wasser zu einem einen elektrischen Heizwiderstand (RH) aufweisenden Durchlauferhitzer (4) gelangt, dort auf Siedetemperatur erhitzt und dadurch über ein Steigrohr (3) in einen Kaffeemehl enthaltenden Filtertrichter (6) getrieben wird und von dort in eine Kaffeekanne (7) abfließt, die mit ihrem Boden auf einer ebenfalls durch den Durchlauferhitzer (4) erwärmten Warmhalteplatte (5) steht und mit einem temperaturabhängigen, thermisch mit dem Durchlauferhitzer (4) gekoppelten Reglerschalter (S1), der bei Erreichen einer Maximaltemperatur (T1) den Heizwiderstand (RH) des Durchlauferhitzers (4) von seiner Spannungsversorgung trennt und nach seiner dadurch eintretenden Abkühlung bei einer unterhalb der Maximaltemperatur (T1) liegenden Schließtemperatur (T2) wieder mit der Spannungsversorgung verbindet, wobei die Kaffemaschine durch Schließen ihres Netzschalters (S) in Betrieb genommen wird. **dadurch gekennzeichnet,** daß die Kaffeekanne (7) - mit Ausnahme des mit der Warmhalteplatte (5) in thermischer Verbindung stehenden Bodens - weitgehend wärmeisolierende Außenflächen aufweist und daß Schaltmittel (Z) vorhanden sind, die durch das erstmalige Öffnen des Reglerschalters (S1) so aktiviert werden, daß sie einen mit dem Heizwiderstand (RH) des Durchlauferhitzers (4) und dem Reglerschalter (S1) in Reihe liegenden, zusätzlichen Schalter (S2) öffnen und bei geschlossenem Netzschalter (S) auch offen halten, so daß der Heizwiderstand (RH) auch nach Abkühlung des Reglerschalters (S1) auf seine Schließtemperatur (T2) von der Spannungsversorgung getrennt bleibt.

2. Kaffeemaschine nach Anspruch 1, **dadurch gekennzeichnet,** daß der zusätzliche Schalter ein vom Durchlauferhitzer (4) thermisch nicht beeinflußter Thermoschalter (S21) und das diesen steuernde Schaltmittel ein thermisch an ihn angekoppelter Heizwiderstand (ZR) ist, der zu der Reihenschaltung des Reglerschalters (S1) und des Thermoschalters (S21) parallelgeschaltet ist und der erst nach Öffnung des Reglerschalters (S1) mit seinem Heizstrom versorgt und dadurch so stark erwärmt wird, daß er nach einer bestimmten Verzögerungszeit den Thermoschalter (S21) öffnet und danach weiter offenhält.

3. Kaffeemaschine nach Anspruch 2, **dadurch gekennzeichnet,** daß die thermische Kopplung zwischen Thermoschalter (S21) und Heizwiderstand (ZR) und dessen Heizleistung so aufeinander abgestimmt werden, daß sich der Thermoschalter (S21) erst nach einer Verzögerungszeit von etwa zwei Minuten nach dem Öffnen des Reglerschalters (S1) öffnet.

4. Kaffeemaschine nach Anspruch 2, **dadurch gekennzeichnet,** daß mit der nach Ablauf der Verzögerungszeit eintretenden Öffnung des Thermoschalters (S21) ein Signalgeber (A) eingeschaltet wird, der ein optisches und/oder akustisches Signal abgibt.

5. Kaffeemaschine nach Anspruch 2, **dadurch gekennzeichnet,** daß der Thermoschalter (S21) am Auslauf des Vorratsbehälters (1) angeordnet ist und mit letzterem thermisch derart gekoppelt ist, daß er sich bei einer erneuten Befüllung des Vorratsbehälters mit kaltem Wasser wieder schließt, wodurch die Kaffeemaschine erneut in Betrieb genommen wird..

6. Kaffeemaschine nach Anspruch 1, **dadurch gekennzeichnet,** daß der zusätzliche Schalter ein durch ein elektrisches Signal betätigbarer elektromechanischer oder elektronischer Schalter (S22) und das ihn betätigende Schaltmittel eine durch das Öffnen des Reglerschalters (S1) triggerbare, elektronische Zeit-Schaltung (ZS) ist, die an den elektronischen oder elektromechanischen Schalter (S22) ein Ausgangssignal abgibt, welches diesen öffnet und offenhält.

7. Kaffeemaschine nach Anspruch 6,
**dadurch gekennzeichnet,**
daß die Zeit-Schaltung (ZS) mit Hilfe eines Zeiteinheiten zählenden Zählers das Ausgangssignal erst nach einer Verzögerungszeit von etwa zwei Minuten nach dem Öffnen des Reglerschalters (S1) abgibt.

8. Kaffeemaschine nach Anspruch 7,
**dadurch gekennzeichnet,**
daß mit der nach Ablauf der Verzögerungszeit eintretenden Öffnung des zusätzlichen Schalters (S22) von der Zeit-Schaltung (ZS) darüber hinaus ein Signalgeber (A) eingeschaltet wird, der ein optisches und/oder akustisches Signal abgibt.

9. Kaffeemaschine nach Anspruch 7,
**dadurch gekennzeichnet,**
daß dem Zähler der Zeit-Schaltung (ZS) als Zeitbasis die Dauer einer Schwingungsperiode der Netz-Wechselspannung zugrundeliegt und daß jeweils binäre Vielfache dieser Zeitbasis als Schaltzeitpunkte zur Verfügung stehen.

10. Kaffeemaschine nach Anspruch 7,
**dadurch gekennzeichnet,**
daß die Zeitschaltung (ZS) außerdem Schaltmittel enthält, die den Zähler jeweils auf Null zurückschalten und bis zum erneuten Öffnen des Reglerschalters (S1) sperren, falls der Reglerschalter (S1) seine Kontakte innerhalb einer vorbestimmten Zeitspanne (Δ t) wieder schließt.

11. Kaffeemaschine nach Anspruch, 10,
**dadurch gekennzeichnet,**
daß die besagten Schaltmittel auf eine Zeitspanne (Δ t) eingestellt sind, die kleiner ist als die kürzeste vorkommende Trockenlauf-Periode ( Δ t1) bei unverkalktem Durchlauferhitzer und die größer ist als die Abkühl-Periode (Δ t2) des wassergefüllten, stark verkalkten Durchlauferhitzers während seiner Brüh-Phase zwischen dem Öffnen und dem Schließen des Reglerschalters (S1).

## Claims

1. A coffee maker with a reservoir (1) from which cold water is delivered to a flow-through heater (4) comprising an electrical heating resistor (RH) where it is heated to the boiling point and thereby moved through a riser (3) to a filter cone (6) containing the coffee grinds, flowing from there into a carafe (7) which rests with its bottom on a warming plate (5) which is equally heated by the flow-through heater (4), and with a temperature-responsive regulator switch (S1) thermally coupled to the flow-through heater (4), said switch disconnecting, on attainment of a maximum temperature (T1), the heating resistor (RH) of the flow-through heater (4) from its voltage supply and re-establishing the connection to the voltage supply after its resultant cooling at a closing temperature (T2) lying below the maximum temperature (T1), the coffee maker being put into operation by the closing of its power switch (S),
**characterized in that** the coffee maker (7) -- with the exception of its bottom which is thermally connected to the warming plate (5)-- includes largely thermally insulating outer surfaces and that switching means (Z) are provided which are activated by the first opening of the regulator switch (S1) such as to open an additional switch (S2) arranged in series with the heating resistor (RH) of the flow-through heater (4) and the regulator switch (S1) and also maintain it open with the power switch (5) closed, so that the heating resistor (RH) remains disconnected from the voltage supply also after the regulator switch (S) has cooled to its closing temperature (T2).

2. The coffee maker as claimed in claim 1,
**characterized in that** the additional switch is a thermostatic switch (S21) not thermally operated on by the flow-through heater (4), and that the switching means controlling it is a heating resistor (ZR) thermally coupled to said switch, said heating resistor being connected in parallel to the series circuitry comprising the regulator switch (S1) and the thermostatic switch (S21) and being supplied with its heating current not until after opening of the regulator switch (S1), said heating resistor being thereby heated such as to open the thermostatic switch (S21) after a preset time delay and maintain it open thereafter.

3. The coffee maker as claimed in claim 2,
**characterized in that** the thermal coupling between the thermostatic switch (S21) and the heating resistor (zR) and its heating power are relatively adjusted such that the thermostatic switch (S21) does not open until after a time delay of about two minutes following opening of the regulator switch (S1).

4. The coffee maker as claimed in claim 2,
**characterized in that** a signaling means (A) issuing a visible and/or audible signal is activated on opening of the thermostatic switch (S21) which occurs upon expiration of the time delay.

5. The coffee maker as claimed in claim 2, **characterized in that** the thermostatic switch (S21) is arranged at the discharge opening of the reservoir (1) and thermally coupled to said reservoir such as to reclose when the reservoir is again filled with cold water, whereby the coffee maker starts a new brewing cycle.

6. The coffee maker as claimed in claim 1, **characterized in that** the additional switch is an electro-mechanical or electronic switch (S22) capable of being actuated by an electrical signal, and that the switching means actuating it is an electronic time delay circuit (ZS) which is adapted to be triggered by the opening of the regulator switch (S1) and issues an output signal which opens and maintains open the electronic or electro-mechanical switch (S22).

7. The coffee maker as claimed in claim 6, **characterized in that** the time delay circuit (ZS), by means of a counter counting units of time, does not issue the output signal until after a time delay of about two minutes following opening of the regulator switch (S1).

8. The coffee maker as claimed in claim 7, **characterized in that** on opening of the additional switch (S22) which occurs following expiration of the time delay, a signaling means (A) is additionally activated issuing a visible and/or audible signal.

9. The coffee maker as claimed in claim 7, **characterized in that** the counter of the time delay circuit (ZS) uses the a.c. line period as time base, and that binary multiples of this time base are available as switching instants.

10. The coffee maker as claimed in claim 7, **characterized in that** the time delay circuit (ZS) further comprises switching means resetting the counter to zero and maintaining it at zero until the regulator switch (S1) reopens, in case the regulator switch (S1) recloses its contacts within a predetermined time period ( $\Delta$ t).

11. The coffee maker as claimed in claim 10, **characterized in that** the said switching means are set at a time period ( $\Delta$ t) which is shorter than the shortest occurring dry-run period ( $\Delta$ t1) with the flow-through heater not clogged with minerals and is longer than the cooling period ( $\Delta$ t2) of the water-filled, heavily clogged flow-through heater during its brewing cycle between the instants of opening and closing of the regulator switch (S1).

## Revendications

1. Machine à café avec un réservoir d'eau froide (1) à partir duquel l'eau froide arrive à un chauffe-eau instantané (4) possédant une résistance électrique (RH), où elle est portée à la température d'ébullition et propulsée par un tube montant (3) dans l'entonnoir porte-filtre (6), d'où elle s'écoule dans la cafetière (7) qui repose par son fond sur une plaque chauffante (5) chauffée également par le chauffe-eau instantané (4), et avec un commutateur de régulation (S1) répondant à la température, couplé thermiquement au chauffe-eau instantané (4), qui isole la résistance de chauffage (RH) du chauffe-eau instantané (4) de sa source d'alimentation lorsqu'est atteinte une température maximale (T1) et, après le refroidissement intervenant de ce fait, rétablit la liaison avec l'alimentation en tension à une température de fermeture (T2) inférieure à la température maximale (T1), la machine à café étant mise en service par la fermeture de son interrupteur d'alimentation (S), caractérisée en ce que la cafetière (7), exception faite de son fond qui est couplé thermiquement à la plaque chauffante (5) possède des surfaces extérieures dont une partie prépondérante est isolante thermiquement et en ce qu'il est prévu des dispositifs de commutation (Z) qui sont activés par la première ouverture du commutateur de régulation (S1), actionnent un second commutateur (S2) monté en série avec le commutateur de régulation (S1) et la résistance de chauffage (RH) du chauffe-eau instantané (4) et le maintiennent ouvert lorsque l'interrupteur d'alimentation (S) est fermé, si bien que la résistance de chauffage (RH) reste coupée de son alimentation en tension même après le refroidis sement ramenant à la température de fermeture (T2) du commutateur de régulation (S1).

2. Machine à café selon la revendication 1, caractérisée en ce que le commutateur supplémentaire est un thermocontacteur (S21) non affecté thermiquement et en ce que le dispositif de commutation qui le commande est une résistance de chauffage (ZR) qui lui est thermiquement couplée, qui est montée en parallèle avec le circuit en série constitué du commutateur S1 et du thermocontacteur (S21), si bien qu'elle n'est mise sous tension que par l'ouverture du commutateur (S1), qu'elle s'échauffe fortement et, après une certaine temporisation, ouvre le thermocontacteur (S21) et le maintient ouvert ensuite.

3. Machine à café selon la revendication 2, caractérisée en ce que le couplage thermique entre le thermocontacteur (S21) et la résistance de chauffage (ZR) d'une part et la puissance thermique de cette dernière d'autre part sont déterminés de manière à ce que le thermocontacteur (S21) ne soit ouvert qu'après une temporisation d'environ deux minutes à compter de l'ouverture du commutateur de régulation (S1).

4. Machine à café selon la revendication 2, caractérisée en ce que l'ouverture du thermocontacteur (S21) survenant après l'écoulement de la temporisation commande un générateur de signal (A) qui fournit un signal optique et/ou acoustique.

5. Machine à café selon la revendication 2, caractérisée en ce que le thermocontacteur (S21) est monté à la sortie du réservoir d'eau (1) et est couplé thermiquement avec ce dernier de manière à ce que seul le versement d'une nouvelle quantité d'eau froide dans le réservoir puisse le refermer, pour remettre ainsi la machine à café en service.

6. Machine à café selon la revendication 1, caractérisée en ce que le second commutateur est un commuta teur électromécanique ou électronique (S22) pouvant être commandé par un signal électrique et en ce que l'organe de commutation le commandant est un circuit de temporisation (ZS) électronique, déclenché par l'ouverture du commutateur de régulation (S1), qui fournit au commutateur électronique ou électromécanique (S22) un signal de sortie qui l'ouvre et le maintient ouvert.

7. Machine à café selon la revendication 6, caractérisée en ce que le circuit de temporisation (ZS), grâce à un compteur comptant des unités de temps, ne fournit le signal de sortie qu'après une temporisation d'environ deux minutes à compter de l'ouverture du commutateur de régulation (S1).

8. Machine à café selon la revendication 7, caractérisée en ce que l'ouverture du second commutateur (S22) par le circuit de temporisation (ZS) se produisant après la temporisation commande en outre un générateur de signal (A) produisant un signal optique et/ou acoustique.

9. Machine à café selon la revendication 7, caractérisée en ce que le compteur du circuit de temporisation (ZS) utilise comme base de temps la durée d'une période d'oscillation de la tension alternative du réseau et en ce que des multiples binaires de cette base de temps sont disponibles comme instants de commutation.

10. Machine à café selon la revendication 7, caractérisée en ce que le circuit de temporisation (ZS) comporte en outre des dispositifs de commutation qui remettent le compteur à zéro et l'inhibent jusqu'à la réouverture du commutateur de régulation (S1) lorsque le commutateur de régulation (S1) referme ses contacts à l'intérieur d'un intervalle de temps ($\_t$) prédéterminé.

11. Machine à café selon la revendication 10, caractérisée en ce que lesdits dispositifs de commutation sont réglés sur un intervalle de temps ($\_t$) qui est plus court que la période de fonctionnement à sec ($\_t1$) la plus brève d'un chauffe-eau instantané non entartré et plus long que la période de refroidissement ($\_t2$) du chauffe-eau instantané fortement entartré mais rempli d'eau, pendant la phase de préparation du café, entre l'ouverture et la fermeture du commutateur de régulation (S1).

## FIG.1

## FIG.3

FIG.2

## FIG.4

## FIG.5